# FASCICULE DE BREVET EUROPEEN

(11) **EP 1 533 350 B1**
(45) Date de publication et mention de la délivrance du brevet: **03.10.2007**
(21) Numéro de dépôt: 04105893.4
(22) Date de dépôt: 18.11.2004
(51) Int. Cl.: C09D 11/00, C09D 11/02

(54) **Composition d'encre pour l'impression par jet continu devie notamment sur des lettres et objets postaux**
Tintenzusammensetzung für kontinuierlichen Richttintenstrahldruck insbesondere auf Briefe und Postartikel
Ink composition for continuous directional ink-jet printing in particular on letters and postal objects

(30) Priorité: 21.11.2003 FR 0350877; 21.11.2003 US 717663
(43) Date de publication de la demande: 25.05.2005
(73) Titulaire: IMAJE S.A., 26500 Bourg les Valence (FR)
(72) Inventeur: Sabys, Jean-Yves, 26600, La Roche De Glun (FR); De Saint-Romain, Pierre, 26000, Valence (FR)
(74) Mandataire: Poulin, Gérard

(56) Documents cités:
- US-A- 4 281 329
- US-A- 5 885 338
- ANONYMOUS: "Non-toxic non aq. ink jet ink - contains propylene carbonate which is good solvent for dyes and polymers, and has low viscosity" RESEARCH DISCLOSURE, vol. 321, no. 020, 10 janvier 1991 (1991-01-10), XP002289086 Emsworth, GB

## Description

L'invention concerne une composition d'encre pour le marquage de supports et d'objets de toutes sortes dont les propriétés sont particulièrement bien adaptées au marquage ou à l'impression par jet de liquide et tout particulièrement au marquage par jet d'encre continu dévié d'une très grande variété de supports, aussi bien poreux que non poreux.

Cette composition d'encre convient particulièrement bien au marquage ou oblitération des lettres et objets postaux, notamment au marquage, à l'oblitération, des timbres.

L'impression par jet d'encre est une technique bien connue, qui permet l'impression, le marquage, ou la décoration de toutes sortes d'objets, à grande vitesse, et sans contact de ces objets avec le dispositif d'impression, de messages variables à volonté, tels que codes barres, dates limites de vente, etc. et ce, même sur des supports non plans.

Les systèmes d'impression par jet d'encre se divisent en deux grands types : « goutte à la demande » (Drop on demand, DOD) ou « jet continu » (CJ) .

Nous nous intéresserons plus particulièrement à cette dernière technique, plus précisément à la technique du jet continu dévié.

La projection par jet continu dévié consiste à envoyer sous pression de l'encre dans une cavité contenant un cristal piézo-électrique, d'où l'encre s'échappe par un orifice (buse) sous la forme d'un jet. Le cristal piézo-électrique, vibrant à une fréquence déterminée, provoque des perturbations de pression dans le jet d'encre, qui oscille et se brise progressivement en gouttelettes sphériques. Une électrode, placée sur le trajet du jet, là où il se brise, permet de donner à ces gouttes une charge électrostatique, si l'encre est conductrice. Les gouttes ainsi chargées sont défléchies dans un champ électrique et permettent l'impression.

Ce type de projection d'encre par jet assure un marquage sans contact à grande vitesse de défilement sur des objets non nécessairement plans et avec la possibilité de changer de message à volonté.

Les compositions d'encre, aptes à la projection par jet continu dévié, doivent satisfaire un certain nombre de critères inhérents à cette technique, relatifs, entre autres, à la viscosité, la conductivité électrique, la solubilité dans un solvant pour le nettoyage, la compatibilité des ingrédients, le mouillage correct des supports à marquer, etc.

De plus, ces encres doivent sécher rapidement, être capables de passer par la buse sans la boucher, avec une grande stabilité d'orientation du jet tout en permettant un nettoyage facile de la tête d'impression.

Les ingrédients qui composent les encres actuelles, pour le jet d'encre de type jet continu dévié, sont des produits organiques ou minéraux, des matières colorantes, telles que des colorants ou pigments, résines ou liants, dans un ou des solvant(s) plus ou moins volatil(s) ou dans l'eau, éventuellement un ou des sel(s) de conductivité, ainsi que des additifs divers.

Le ou les sel (s) de conductivité éventuel(s) apporte(nt) à l'encre la conductivité nécessaire à la déviation électrostatique. On pourra à ce sujet se reporter au document US-A-4 465 800.

Les additifs comprennent les surfactants qui modifient le pouvoir mouillant ou pénétrant de l'encre (US-A-5 395 431), en particulier ceux qui modifient ou régulent la tension superficielle statique ou dynamique, tels que le Fluorad^{®} FC 430 de la Société 3M^{®}, les agents qui inhibent la corrosion induite par les sels mentionnés plus haut (voir documents EP-A-0 510 752, US-A-5 102 458), ou encore les additifs qui protègent l'encre contre les proliférations de bactéries et d'autres micro-organismes : il s'agit de biocides, bactéricides, fongicides et autres, particulièrement utiles dans les encres contenant de l'eau, les tampons régulateurs de pH (voir EP-A-0 735 120), les agents antimousse.

Les matières colorantes sont appelées « colorants ou pigments », selon qu'elles sont respectivement solubles ou insolubles dans le solvant utilisé.

Les pigments, par nature insolubles, sont donc dispersés et peuvent être opaques ou non. Ils apportent à l'encre sa couleur, son opacité, ou des propriétés optiques particulières, telles que la fluorescence (cf. brevets ou demandes de brevets US-A-4 153 593, US-A-4 756 758, US-A-4 880 465, EP-A-0 289 141, US-A-5 395 432, GB-A-2 298 713). Dans certains cas, les colorants apportent eux aussi suffisamment de conductivité à l'encre pour qu'il n'y ait pas besoin d'ajouter un sel de conductivité. Les colorants connus sous la dénomination C. I. Solvent Black 27, 29, 35 et 45 sont dans ce cas.

Le ou les liant (s) ou résine (s) est (sont) généralement pour la plupart un(des) composé(s) solide(s) et polymérique(s) et leur choix est dicté par leur solubilité dans les solvants sélectionnés et par leur compatibilité avec les colorants et les autres additifs, mais aussi et surtout en fonction des propriétés qu'ils apportent au film d'encre, une fois sec (voir brevets ou demandes de brevets US-A-4 834 799, GB-A-2 286 402, US-A-5 594 044, US-A-5 316 575, WO-A-96/23844, WO-A-95/29 287).

Leur fonction première est d'apporter à l'encre l'adhérence sur le maximum de supports ou sur des supports spécifiques, par exemple non poreux. Ils permettent aussi de donner à l'encre la viscosité adéquate pour la formation des gouttes à partir du jet et ils apportent à l'encre, ou plutôt au marquage obtenu, l'essentiel de ses propriétés de résistance aux agressions physiques et/ou chimiques.

Le solvant de ces encres est constitué le plus fréquemment d'un mélange comprenant, d'une part, une quantité majoritaire de solvants volatils et peu visqueux, afin de permettre le séchage très rapide des marquages et d'ajuster la viscosité à la valeur souhaitée, par exemple de 2 à 10 mPa.s et, d'autre part, des solvants plus visqueux et moins volatils à séchage plus lent, en une quantité moindre, pour éviter le séchage de l'encre dans la buse lors des phases d'arrêt de l'appareil d'impression (cf brevets ou demandes de brevets US-A-4 155 767, WO-A-92 14794, WO-A-92 14 795 et US-A-4 260 531).

Les solvants volatils utilisés le plus souvent sont les alcools, les cétones ou les esters de bas poids moléculaire, comme cela est indiqué dans les brevets US-A-4 567 213, et US-A-5 637 139. Parmi ces solvants on peut citer essentiellement le méthanol, l'éthanol, les 1- et 2-propanol, l'acétone, la méthyl éthyl cétone (« MEK »), la méthyl-isobutyl cétone, l'acétate d'éthyle, et le tétrahydrofuranne.

Le brevet US-A-4 210 566 présente une encre majoritairement à base d'acétate de n-propyle.

Le tétrahydrofuranne est cité dans le brevet US-A-4 155 767 comme constituant essentiel du solvant d'une encre pour l'impression par jet d'encre (40 à 85 %).

Le document US-A-4 166 044 décrit une encre sans liant, dans laquelle le solvant comprend de l'eau (10 à 35 %), un alcool (6 à 25 %) et un composé organique choisi, par exemple, de manière générale, parmi les éthers cycliques. Cette encre présente tous les inconvénients liés à la présence d'eau.

Enfin, le document JP-A-63 06316 décrit une composition d'encre pour jet d'encre dont le solvant est de l'eau mélangée à un autre solvant, choisi parmi 14 autres composés dont le 1,3-dioxolanne.

Les solvants moins volatils ayant notamment une fonction de retardateur de séchage sont le plus souvent les cétones, telles que la cyclohexanone, les éthers de glycol, cités dans les documents US-A-4 024 096 et US-A-4 567 213, les acétals, tels que le tétrahydrofuranne ou le dioxanne, mentionnés dans le document US-A-4 155 767, le diméthyl formamide ou le diméthylsulfoxyde (US-A-4 155 895), les lactones (EP-A-0 034 881), la N-méthyl pyrrolidone (EP-A-0 735 120), les glycols (WO-A-96 23 844), et même des hydrocarbures aliphatiques ayant en plus une fonction de pénétrant de films d'huile (US-A-4 166 044), ou encore l'eau, seule ou en combinaison avec d'autres solvants, cités plus haut, on se référera, à ce propos, aux documents US-A-4 153 593, GB-A-2 277 094 et FR-A-2 460 982.

De manière générale, les solvants principaux ou majoritaires des encres pour la projection par jet continu dévié doivent répondre à un certain nombre de critères, en particulier :
- leur volatilité doit être suffisante pour que l'encre sèche rapidement sur le support à marquer, mais pas trop grande, afin de ne pas s'évaporer trop vite dans l'imprimante ;
- leur pouvoir solvant, vis-à-vis des liants de l'encre, des colorants ou des dispersions pigmentaires et vis-à-vis des supports à imprimer, doit permettre de conférer à l'encre une bonne adhérence ;
- ils doivent avoir la capacité de maintenir dissociées les espèces ioniques (sels) qui confèrent à l'encre sa conductivité électrique ;
- leur effet sur la santé des personnes, à savoir leurs toxicité, nocivité, caractère irritant et inflammabilité, doivent être réduits ;
- ils doivent permettre de maintenir stérile une encre éventuellement destinée à être ingérée.

Aucun des solvants, dits principaux ou majoritaires, actuellement mis en oeuvre couramment dans les encres pour impression par jet continu, ne remplit simultanément l'ensemble des critères mentionnés ci-dessus.

Ainsi, le méthanol est toxique et présente un pouvoir solvant médiocre ; l'éthanol n'est pas suffisamment volatil et son pouvoir solvant n'est pas assez important ; l'acétate d'éthyle et les autres acétates ont une odeur extrêmement forte, ce qui est un défaut rédhibitoire dans de nombreuses applications ; l'acétone est trop volatile avec un point éclair très bas (-18°C) ; la méthyl-éthyl-cétone (« MEK ») a une solubilité adéquate et présente un bon pouvoir solvant, mais elle est irritante, odorante et elle est très inflammable avec un point éclair de -9°C, de plus, elle est même proscrite par les réglementations de certains pays ; le tétrahydrofuranne (THF) a une volatilité plus grande que celle de la méthyl-éthyl-cétone, puisque son point d'ébullition est de 10°C inférieur à celui de la méthyl-éthyl-cétone, son point éclair de -17°C est presque aussi bas que celui de l'acétone, il peut former des peroxydes explosifs, il est irritant comme la méthyl-éthyl-cétone et des encres en contenant plus de 25 % doivent être étiquetées comme irritantes.

A cause de leur inflammabilité, la plupart des solvants mentionnés ci-dessus (méthanol, éthanol, méthyl-éthyl cétone, acétate d'éthyle, acétone), sont classés « > 2 » (« rated > 2 », en anglais) pour tous les critères du référentiel de la NFPA (« National Fire Protection Association ») aux Etats-Unis.

Il existe donc un besoin non satisfait pour une composition d'encre convenant, en particulier, pour l'impression par jet continu dévié, notamment sur des lettres et autres objets postaux dont le solvant remplit simultanément, entre autres, l'ensemble des critères mentionnés ci-dessus, en conséquence de quoi, sont communiqués à l'encre les propriétés souhaitées, tandis que sont satisfaites, les exigences, en particulier, réglementaires en matière de toxicité, d'inflammabilité et de protection de l'environnement.

Il serait intéressant de disposer d'un solvant qui permette de dissoudre les colorants et autres ingrédients qui peuvent conférer à l'encre notamment son indélébilité sur les substrats et en particulier sur les timbres.

Il existe encore un besoin pour une encre convenant en particulier pour l'impression par jet d'encre continu dévié qui permette le marquage rapide de tous types d'objets aux caractéristiques de surfaces différentes, aussi bien poreux que non poreux.

L'encre doit, en outre, donner un marquage qui présente une bonne adhérence et une bonne résistance aux agressions chimiques et, de manière générale, présenter toutes les propriétés habituellement requises des encres pour les imprimantes à jet d'encre, notamment pour les imprimantes utilisant la technique du jet continu : viscosité, résistivité, etc.

L'encre doit, de plus, permettre le marquage à grande vitesse, d'objets même faiblement poreux en donnant toujours une impression d'excellente qualité.

Enfin, l'encre doit posséder les propriétés requises (notamment par les administrations postales de différents pays) quant à l'indélibilité des impressions obtenus avec l'encre par exemple sur des objets postaux, lettres et timbres.

Le but de l'invention est donc de fournir une composition d'encre convenant, en particulier, pour l'impression par jet continu dévié, qui répond, entre autres, à l'ensemble des besoins indiqués plus haut, qui satisfait aux critères et exigences mentionnés ci-dessus, et qui ne présente pas les inconvénients, limitations, défauts et désavantages des compositions d'encre de l'art antérieur, et qui surmonte les problèmes des compositions de l'art antérieur liés, en particulier, à la nature du solvant qu'elles contiennent.

Ce but et d'autres encore sont atteints, conformément à l'invention, par une composition d'encre pour l'impression par jet continu dévié, liquide à la température ambiante, comprenant :
- un liant ;
- un ou plusieurs colorant(s) et/ou pigment(s) ; et
- un solvant ;
dans laquelle ledit solvant comprend plus de 70 % en poids - par rapport au poids total de l'encre - de carbonate de propylène, et moins de 10 % en poids d'eau.

Par température ambiante, on entend généralement une température de 5 à 30°C, de préférence de 10 à 25°C, de préférence encore de 15 à 24°C, mieux de 20 à 23°C. Il est bien entendu que l'encre est liquide à la pression atmosphérique.

Le carbonate de propylène a pour numéro de CAS [108-32-7], et sa formule développée est la suivante :

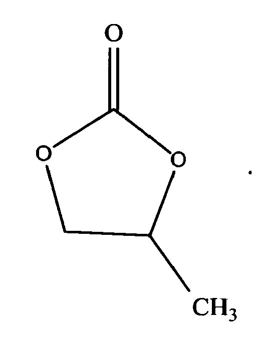

L'encre selon l'invention est une encre spécifique pour l'impression par jet continu dévié, qui fondamentalement contient un solvant spécifique en proportions spécifiques, contient peu ou pas d'eau, et est liquide à la température ambiante.

Aucun document de l'art antérieur ne décrit une encre présentant l'ensemble de ces caractéristiques spécifiques.

L'invention est basée sur la constatation surprenante que le carbonate de propylène permet la formulation d'une encre, convenant particulièrement à la projection par jet continu dévié et que cela est possible sans apport d'eau à la formulation ni d'un autre solvant qui augmenterait significativement la dissociation des ions nécessaire à la conductivité.

Dans l'art antérieur, l'eau est généralement ajoutée pour aider à la dissociation des sels ; selon l'invention, et de manière surprenante, la composition d'encre ne contient pas ou peu d'eau et présente cependant une conductivité suffisante grâce à l'action de dissociation du carbonate de propylène.

Il a été mis en évidence, selon l'invention, en particulier, que, de manière totalement suprenante, le carbonate de propylène est un solvant dont le pouvoir solvant et pénétrant est tel qu'il permet la formulation d'une composition d'encre convenant notamment pour l'oblitération de lettres et objets postaux, qui est conductrice, donc projetable par jet continu, et ceci bien qu'elle ne contienne peu ou pas d'eau.

Malgré sa faible volatilité et sa très faible vitesse de séchage, le carbonate de propylène, de manière tout à fait étonnante permet avec la composition d'encre selon l'invention l'impression à grande vitesse d'objets même faiblement poreux, grâce à sa grande capacité de pénétration, notamment des substrats comprenant de la cellulose, tel que le papier ou le carton qui constituent les lettres, objets postaux et timbres.

Il est très surprenant qu'un solvant aussi peu volatil que le carbonate de propylène assure une vitesse d'impression élevée, alors même qu'on s'attendrait à l'inverse ; cette rapidité d'impression est permise par la grande capacité de pénétration du carbonate de propylène et donc de l'encre le contenant dans les substrats.

Il ne découlait pas de manière évidente des compositions connues que le choix du carbonate de propylène (de plus en proportions spécifiques) parmi la multiplicité des solvants organiques existants - pouvait conduire à une encre satisfaisant à tous les critères, exigences et besoins mentionnés plus haut, notamment en relation avec la nature du solvant.

Au contraire, il existait dans ce domaine de la technique - qui est celui des encres pour l'impression par jet d'encre - un fort préjugé, largement répandu, à l'encontre de l'utilisation du carbonate de propylène comme solvant car celui-ci est très peu volatil, mais très polaire.

L'invention triomphe donc d'un préjugé largement répandu dans ce domaine de la technique en utilisant le carbonate de propylène, de plus en proportions très élevées, comme solvant dans les encres pour l'impression par jet d'encre.

Le carbonate de propylène est seulement cité comme ayant une action plastifiante (US-A-6 558 779 et US-A-6 460 957) ou comme co-solvant (US-A-6 555 168, US-A-6 533 408) ou comme électrolyte (US-A-6 501 587), comme pénétrant (US-A-6 568 795, US-A-6 554 418, US-A-6 534 566, US-A-6 527 844, US-A-6 527 387) ou encore comme promoteur de coalescence de systèmes à base de polymères dispersés (latex) (US-A-6 559 245).

L'utilisation du carbonate de propylène, dans les proportions spécifiques selon l'invention dans des compositions d'encre analogues à celles de l'invention à faible teneur en eau, en particulier pour l'impression par jet continu dévié, n'est donc ni décrite, ni suggérée dans l'art antérieur. En effet, la plupart des brevets ou demandes de brevets de l'art antérieur ne mentionnent l'utilisation du carbonate de propylène qu'en complément d'encres à base d'eau.

Ainsi :
- Le document US-A-4 281 329 concerne un « milieu liquide d'enregistrement » qui est destiné à être utilisé exclusivement dans des dispositifs du type goutte à la demande « drop-on-demand ». Il n'est jamais mentionné, ni suggéré dans ce document que le milieu puisse être utilisé dans d'autres dispositifs et notamment dans des dispositifs d'impression à jet continu dévié.

Ce milieu contient en tant que composant essentiel un ester de l'acide carbonique de formule générale (A) ou (B).

Ces formules et en particulier la formule (B) décrivant les esters cycliques de l'acide carbonique recouvrent un nombre considérable de composés. Les colonnes 5 à 8 citent 48 exemples de composés particuliers.

Le carbonate de propylène est utilisé dans les exemples, mais toujours en combinaison avec des quantités importantes d'eau et dans des dispositifs de type « goutte à la demande ». La proportion spécifique critique supérieure à 70 % selon l'invention n'est pas citée.

Ce document ne contient aucune incitation conduisant à utiliser les composés de formule (B) et encore moins, parmi tous ceux-ci, le carbonate de propylène dans une encre sans eau et dans une encre spécifique pour l'impression par jet continu dévié.

Il n'y a aucune indication dans ce document, sur les propriétés inattendues du carbonate de propylène mise en évidence par les inventeurs en relation notamment avec sa grande capacité de pénétration, qui le rendent particulièrement adéquates pour une utilisation dans une encre pour l'impression par jet continu dévié.

En d'autres termes, le document US-A-4 281 329 revendique des compositions d'encre contenant jusqu'à 99,5 % de carbonate de propylène et un colorant, mais pas de liant, mais ne sait pas expliquer quel composant permet d'obtenir la conductivité nécessaire à la projection par jet continu. D'autre part, les encres des exemples contiennent toutes des quantités non négligeables d'eau et aucune ne démontre sa capacité à être projetés par jet continu, mais seulement par jet « drop on demand ».
- Le document US-B1-6 432 184 concerne une composition d'encre qui comprend un colorant, un véhicule qui peut être du carbonate de propylène et obligatoirement un stabilisant à la lumière, un composé dit « anti-curl », et un poly(chlorure de dialkyl diallyl ammonium). Cette composition d'encre est essentiellement utilisée dans des dispositifs d'impression acoustiques à jet d'encre. Aucun exemple spécifique mettant en oeuvre une encre avec du carbonate de propylène n'est donné et il n'est pas mentionné que les encres puissent être utilisées dans des appareils d'impression à jet d'encre continu.

Aucune proportion de carbonate de propylène en liaison avec les propriétés n'est par ailleurs indiquée.

En fait, la présence dans ces encres des composants obligatoires ci-dessus et notamment du poly(chlorure de dialkyl diallyl ammonium) les rendent totalement inadaptées à leur mise en oeuvre dans les imprimantes à jet continu.

En d'autres termes, le document US-A-6 432 184 revendique une encre contenant du carbonate de propylène avec un stabilisant à la lumière et un composant « anti-curl », et un halogénure de di-alkyle diallyle qui risque de rendre l'encre particulièrement corrosive vis-à-vis des métaux ferreux donc inutilisable dans les imprimantes industrielles par jet continu. Ce brevet ne présente aucun exemple de réalisation comprenant du carbonate de propylène.
- Le document US-B1-6 444 020 décrit un colorant azoïque et une encre pour l'impression par jet d'encre contenant ledit colorant.

Parmi un très grand nombre de solvants, le carbonate de propylène est cité, mais aucun exemple d'encre le mettant en oeuvre est cité.

En outre, ce document n'indique pas que ces encres puissent de manière générale être utilisées dans la technique du jet continu dévié, et encore moins qu'une encre contenant du carbonate de propylène présente les avantages inattendus selon l'invention et soit particulièrement adaptée à la technique du jet continu dévié. Enfin, aucune proportion spécifique nécessaire de carbonate de propylène n'est mentionnée.

En d'autres termes, le document US-A-6 444 020 décrit une encre pour jet d'encre où le carbonate de propylène peut être utilisé seul pour dissoudre un colorant spécifique, mais il ne décrit pas si ni comment cette formulation pourrait être projetée par la technique du jet continu dévié. Il ne décrit pas non plus comment la composition peut être rendue suffisamment conductrice. Aucun exemple ne vient étayer l'utilisation du carbonate de propylène.
- Le document US-A-6 086 661 concerne une composition d'encre aqueuse pour l'impression par jet d'encre qui comprend un composé d'ammonium quaternaire, un véhicule liquide, un composé stabilisant à la lumière, un antioxydant stabilisant à la lumière, un sel, un biocide et un colorant.

Le véhicule est présent en une quantité de 5 à 70 % en poids et peut être notamment du carbonate de propylène. Toutefois, ce document ne décrit ni ne suggère les avantages et effets bénéfiques surprenants obtenus selon l'invention avec le carbonate de propylène dans le cadre d'une encre pour l'impression par jet continu ; il n'indique pas en outre que ces avantages puissent être obtenus pour une proportion spécifique de carbonate de propylène supérieure à 70 % en poids.

De plus, les compositions de ce document ne contiennent ni résine, ni polymère.

En d'autres termes, le document US-A-6 086 661 décrit une encre avec jusqu'à 70 % d'un véhicule qui peut être du carbonate de propylène avec un sel organique ou inorganique, un colorant, un « anti-curl », un stabilisant lumière, un biocide et un seul quaternaire d'imidazolium, phosphonium ou ammonium. Cette composition ne contient ni résine, ni polymère.
- Le document US-A-5 593 486 et US-A-5 122 187 décrivent des compositions d'encres thermofusibles (« hot melt ») donc solides à température ambiante pouvant utiliser du carbonate de propylène comme propulseur (« propellant »). Les encres solides sont donc inutilisables en jet continu à température ambiante.

Au contraire des compositions de l'art antérieur, la composition d'encre selon l'invention contient une très faible quantité d'eau inférieure à 10 % en poids, de préférence inférieure à 5 %, de préférence encore, inférieure à 1 % en poids par rapport au poids total de l'encre.

La composition d'encre selon l'invention peut même être considérée comme étant essentiellement exempte d'eau (0 % d'eau) .

En fait, l'eau présente n'est que l'eau apportée se trouvant à titre d'impureté dans les divers composants de l'encre. Plus le degré de pureté des composants choisis sera grand, plus la teneur en eau sera faible.

La faible teneur ou absence d'eau dans la composition d'encre selon l'invention favorise l'impression à grande vitesse pour laquelle une vitesse d'évaporation très élevée est nécessaire.

Les critères et exigences définies quant aux propriétés d'un solvant pour une composition d'encre pour la projection par jet continu sont remplis par le carbonate de propylène, ainsi :
- son point d'ébullition est de 230°C, et son point éclair est de 123°C, il n'est donc pas classé dans les produits inflammables au sens de la législation des transports, il est à noter que le point éclair de l'ensemble de la composition est généralement de ce fait supérieur à 60°C ;
- sa volatilité est de 0,01 (celle de l'acétate de butyle étant égale à 1), ce qui est très faible.

Sa capacité à dissoudre la plupart des polymères est relativement faible à cause de sa très forte polarité. Sa capacité à dissoudre les polymère n'est pas aussi générale que d'autres solvants plus volatils comme la méthyl-éthyl-cétone. Cependant, il dissout complètement des polymères comme les résines cétoniques, phénoliques, cellulosiques entre autres.

Il est d'ailleurs étonnant que malgré ce faible pouvoir solvant des polymères, le carbonate de propylène permette cependant la formulation d'encres pour le jet d'encre assurant des impressions indélébiles et de grande qualité.

Le carbonate de propylène dissout ainsi un grand nombre de résines ou polymères servant de liant de l'encre et assurant l'adhérence sur les supports à marquer.

Sa capacité à dissoudre les colorants, en particulier de type C. I. solvent dyes, est excellente.

Le carbonate de propylène est un produit non inflammable, qui n'est pas nocif, et qui est peu irritant.

Le carbonate de propylène est en outre classé « < 2 » pour tous les critères du référentiel de la NFPA (« National Fire Protection Association ») aux Etats-Unis. L'odeur du carbonate de propylène est, en outre extrêmement faible, difficilement perceptible et n'est pas désagréable.

Selon un aspect fondamental de l'invention, les encres selon l'invention donnent des marquages, impressions, oblitérations, indélébiles selon les normes les plus sévères des services postaux de différents pays. L'utilisation d'encre contenant du carbonate de propylène dans ces buts n'est ni mentionnée, ni suggérée dans l'art antérieur.

Le carbonate de propylène permet de formuler des encres dont le fonctionnement en impression à jet d'encre continu dévié ne nécessite pas l'addition d'un fluide (composé de la fraction volatile de l'encre) pour maintenir la viscosité et la composition constante. Ce type de fluide est couramment appelé « make-up ink » ou additif, ou solvant d'ajout par l'homme du métier.

Le carbonate de propylène est donc supérieur aux solvants principaux, le plus souvent utilisés jusqu'alors dans les compositions d'encre pour la projection par jet continu.

Le carbonate de propylène est en effet plus intéressant que :
- le méthanol qui est toxique ;
- l'éthanol, qui est plus volatil et plus inflammable ;
- l'acétate d'éthyle, ou les autres acétates, dont l'odeur est très forte ;
- l'acétone qui est trop volatile avec un point éclair très bas (-18°C) ;
- la méthyl-éthyl-cétone, qui est irritante, a un point éclair très inférieur (-9°C).

En outre, tous les solvants cités ci-dessus, sont, à cause de leur inflammabilité classés « > 2 » pour les critères du référentiel de la NFPA.

La composition d'encre selon l'invention est caractérisée en outre par une proportion spécifique de carbonate de propylène, supérieure à 70 % en poids du poids total de l'encre.

Il a été mis en évidence que cette proportion est critique pour que la composition d'encre selon l'invention présente tous les effets et avantages décrits dans la présente, notamment en relation avec la qualité du marquage et son indélibilité.

La composition selon l'invention comprend ainsi plus de 70 % en poids de carbonate de propylène, de préférence plus de 80 %, de préférence encore plus de 85 %, mieux plus de 90 % en poids de carbonate de propylène.

En outre, la composition contient généralement au plus 97 %, de préférence au plus 95 % en poids de carbonate de propylène.

Une plage préférée de la teneur en carbonate de propylène sera donc par exemple de 90 à 95 % en poids.

De préférence, la composition selon l'invention comprend généralement jusqu'à 20 % en poids, de préférence de 5 à 15 % en poids d'un ou plusieurs autre(s) solvant(s) organique(s) différent(s) du carbonate de propylène.

Le ou lesdits autre(s) solvant(s) organique(s) faisant partie du solvant et autre(s) que le carbonate de propylène est(sont) choisi(s), par exemple, parmi les alcools, en particulier, les alcools de bas poids moléculaire, par exemple, les alcools aliphatiques ; les cétones ; les éthers d'alkylènes glycol et les esters de ceux-ci, tels que les acétates ; le diméthyl formamide ; la N-méthyl pyrrolidone ; et les carbonates autres que le carbonate de propylène, tels que le carbonate d'éthylène et les diméthyl- et diéthyl-carbonates ; et leurs mélanges.

Généralement, la quantité de le ou les autre (s) solvant (s) organique (s) autre (s) que le carbonate de propylène est choisie de façon telle que le point éclair de l'ensemble de la composition reste supérieur à 60°C.

De préférence, le ou lesdits autre(s) composé(s) organique(s) faisant partie du solvant est(sont) des solvants organiques dont la volatilité est supérieure à celle du carbonate de propylène.

De préférence, ce ou ces autres solvants possède(nt), en outre, la propriété de dissoudre les autres ingrédients de l'encre, notamment le liant, les matières colorantes, les additifs, etc.

Les alcools seront, de préférence, choisis parmi les alcools aliphatiques linéaires ou ramifiés de 1 à 5 atomes de carbone, tels que le méthanol, l'éthanol, le propanol-1, le propanol-2, le n-butanol, le butanol-2, le tert-butanol, etc.

Les cétones seront, de préférence, choisies parmi les cétones de 3 à 10 atomes de carbone, telles que l'acétone, la butanone (méthyl-éthyl-cétone), la pentanone-2 (méthyl-propyl-cétone), et la méthyl-4 pentanone-2 (méthyl-isobutyl-cétone).

Les éthers d'alkylène glycol sont choisis parmi les éthers monoalkyliques (en C1 à C6) ou dialkylique (en C1 à C6) d'alkylène glycol comprenant 1 à 10 atomes de carbone dans la chaîne alkylène, de préférence il s'agit d'éthers d'éthylène ou de propylène glycol, tels que le méthoxy-propanol.

Les esters d'éthers de glycol sont choisis, de préférence, parmi les esters de ceux-ci avec les acides carboxyliques, aliphatiques saturés de 1 à 6 atomes de carbone, tels que l'acide formique, l'acide acétique, l'acide propionique, l'acide butyrique, l'acide valérique et l'acide caproïque. On peut citer, par exemple, l'acétate de méthoxypropyle, l'acétate de butyldiglycol, etc..

La composition d'encre selon l'invention comprend également un liant comprenant un ou plusieurs polymère(s) et/ou résine(s).

Ces polymères et/ou résines sont choisis, de préférence, parmi les résines (méth)acryliques, vinyliques, cétoniques, phénoliques, cellulosiques, styréniques, époxy, les polyuréthanes, les styrène-acrylates et les combinaisons de deux ou plus de ceux-ci.

Des exemples de ces résines sont les suivants :
Pour les résines acryliques, méthacryliques et styrène-acrylates, les Joncryl^{®} de la Société JOHNSON POLYMER, les Acryloid^{®} de la Société ROHM & HAAS, les SMA^{®} de la Société ATOCHEM ou les Neocryl^{®} de ZENECA.
Pour les résines vinyliques, les Hostaflex^{®} de la Société VIANOVA, les Vinylite^{®} de UNION CARBIDE ou les Vinnol^{®} de WACKER.
Pour les résines cétoniques, les produits proposés par les Sociétés HULS et BASF, tels que les résines dites AP et SK de HULS et les résines LAROPAL^{®} de BASF.
Pour les résines phénoliques, les produits proposés par la Société VIANOVA sous la dénomination ALNOVOL^{®}.
Parmi les résines cellulosiques, comme les nitrocelluloses, les éthylcelluloses, les acéto-propionates ou acétobutyrates de cellulose, on peut citer, par exemple, les produits proposés par les Sociétés Aqualon ou EASTMAN.
Parmi les résines époxy, on peut citer les Epikote^{®} proposés par la Société SHELL ou les Araldite de CIBA.
Parmi les polyuréthanes, on peut citer les Surkopak^{®} de la Société MITCHANOL.

La proportion de liant dans la composition d'encre selon l'invention est généralement de 0,1 à 30 % en poids, de préférence de 1 à 25 % en poids, de préférence encore de 3 à 20 % en poids.

La composition d'encre peut, en outre, comprendre un ou plusieurs plastifiant(s) (de la ou des résine(s) ou polymère(s) du liant) choisi(s), par exemple, parmi les plastifiants connus de l'homme du métier et choisis en fonction du liant utilisé comprenant un ou plusieurs polymère(s) et/ou résine(s), on peut citer, en tant que plastifiant, par exemple, les polyuréthanes thermoplastiques.

Le pouvoir solvant du carbonate de propylène permet d'incorporer facilement de tels composés plastifiants dans la composition de l'invention.

Le ou les plastifiant(s) est(sont) généralement présent(s) à raison de 0,1 à 20 % en poids.

Le ou les colorant(s) et/ou pigment(s) peut(vent) être choisi(s) parmi tous les colorants ou pigments convenant à l'usage recherché, connus de l'homme du métier, certains de ces pigments ou colorants ont déjà été cités plus haut.

On les choisira généralement parmi les colorants et pigments connus sous la dénomination de « C. I. Solvent Dyes » et « C. I. Pigments ».

A titre d'exemple, des pigments et colorants les plus courants, on peut citer les C. I. Solvent Black 29, C. I. Solvent Black 7, C. I. Solvent Black 28, C. I. Solvent Black 35, C. I. Solvent Blue 70, C. I. Solvent Red 124, les dispersions de Pigment Blue 60 ou de Pigment Blue 15.

La quantité totale de colorant(s) et/ou de pigment(s) est généralement de 0,05 à 25 % en poids, de préférence, de 1 à 20 %, de préférence encore de 3 à 10 % de la composition.

Grâce à la capacité du carbonate de propylène de dissoudre le ou les colorant(s) et en particulier les colorants les plus résistants à l'eau, en quantité plus importante que les solvants habituels, il est notamment possible, dans le cas d'un colorant fluorescent, d'obtenir des encres particulièrement fluorescentes, c'est-à-dire visibles sous un faible éclairement UV.

La composition selon l'invention peut, en outre, éventuellement, comprendre au moins un sel de conductivité.

En effet, l'encre selon l'invention étant applicable par jet continu, elle doit avoir une conductivité électrique suffisante généralement supérieure à 300 µS/cm à 20°C, de préférence, de l'ordre de 500 à 2 000 µS/cm (à 20°C), ou plus.

Le carbonate de propylène, par rapport aux autres solvants, favorise la conductivité, en aidant à la dissociation des ions contenus dans l'encre et de ce fait les quantités de sels de conductivité (voir plus loin) peuvent être réduites.

Les produits apportant à l'encre la conductivité nécessaire à la projection par jet continu sont des composés ionisables, tels que les sels, il est possible que les colorants, déjà présents dans l'encre, donnent suffisamment de conductivité à celle-ci pour qu'il n'y ait pas besoin d'ajouter de sel de conductivité proprement dit : c'est le cas des composés connus sous la dénomination « C. I. Solvent Black 27, 29, 35 et 45 », déjà cités.

Cependant, il sera souvent nécessaire d'inclure, dans la composition d'encre, un sel de conductivité différent des colorants et qui est généralement choisi parmi les sels de métaux alcalins, alcalino-terreux et d'ammoniums simples ou quaternaires, sous forme d'halogénures (chlorures, bromures, iodures, fluorures), de perchlorates, de nitrates, thiocyanates, formiates, acétates, sulfates, propionates, hexafluorophosphates, hexafluoroantimonates etc.

Ces sels de conductivité seront donc présents, si nécessaire, dans la composition d'encre de manière à communiquer à l'encre la conductivité ci-dessus : de préférence, leur quantité est de 0,1 à 20 % en poids, de préférence, encore de 0,1 à 10 % en poids et mieux de 0,1 à 5 % en poids.

La composition selon l'invention peut, en outre, comprendre un ou plusieurs additifs choisis parmi les composés qui améliorent la solubilité de certains de ces composants, la qualité d'impression, l'adhérence, ou encore le contrôle du mouillage de l'encre sur différents supports.

Le ou les additif(s) pourra(ont) être choisi(s), par exemple, parmi les agents antimousse, les stabilisants chimiques, les stabilisants UV ; les agents tensio-actifs, tels que le Fluorad^{®} FC 430, les agents stabilisant la corrosion par les sels, les bactéricides, les fongicides et biocides, les tampons régulateurs de pH, etc.

Le ou les additif(s) est(sont) utilisé(s) à des doses très faibles, en général inférieures ou égales à 5 % et parfois aussi faibles que 0,01 %, selon qu'il s'agisse des anti-mousse, des stabilisants ou des tensio-actifs.

L'invention a également pour objet un procédé de marquage d'objets, par exemple, poreux ou non poreux, par projection sur des objets d'une composition d'encre, telle qu'elle a été décrite ci-dessus. Le marquage s'effectue par la technique du jet continu dévié.

L'invention a encore pour objet un substrat ou support, par exemple, poreux ou non poreux, pourvu d'un marquage obtenu par le séchage de la composition d'encre, telle que décrite ci-dessus.

Ce substrat peut être en métal, par exemple, en aluminium, en acier (boîtes de boissons), en verre (bouteilles de verre), en céramique, en un matériau contenant de la cellulose tel que du papier, du carton ou du bois, en polymère synthétique (« plastique »), tels que PVC, PET, en polyoléfine, telles que polyéthylène (PE), polypropylène (PP), en « Plexiglas », ou en toute autre substance non poreuse ou poreuse ou en composite de plusieurs des matériaux précédents.

Une application préférée selon l'invention est le marquage, l'impression, l'oblitération d'objets postaux, de lettres, colis, le substrat est alors un substrat contenant de la cellulose, de préférence un substrat en majorité ou en totalité en cellulose tel que du papier (éventuellement couché, glacé ou autre) ou du carton. Le substrat sur lequel on réalise l'oblitération, l'impression est par exemple un timbre poste ou autre vignette (plus exactement la surface de celui-ci qui reste libre, exposée lorsqu'il a été collé par exemple sur un objet postal, un colis, une lettre).

On obtient des marquages, des impressions d'excellente qualité sur tous les substrats, même très peu poreux.

Dans l'application préférée selon l'invention, on obtient une excellente qualité d'impression, de marquage, d'oblitération de l'objet postal, de la lettre par exemple une excellente qualité d'oblitération des timbres quelle que soit la qualité de surface de ceux-ci (lisse, glacée, etc.)

En outre, selon un avantage essentiel de la composition selon l'invention, le marquage, l'impression, l'oblitération obtenu sur le substrat par exemple l'objet postal, la lettre, en particulier sur un timbre est indélébile.

Pour indélébile, on entend généralement que l'impression, le marquage, l'oblitération, réalisé n'est pas substantiellement éliminé du substrat, par exemple de l'objet postal, de la lettre, du timbre, par immersion même prolongée (à savoir plusieurs heures ou jours, par exemple environ 24 heures) dans diverses solutions aqueuses et organiques, telles que l'eau déminéralisée, les alcools par exemple l'éthanol, le méthanol, la méthyl-éthyl-cétone, l'hexane, le toluène, la diméthylformamide, l'eau alcaline à pH 11, l'eau de javel à 8 % dans l'eau, etc.

L'invention sera mieux comprise à la lecture de la description suivante de modes de réalisation de l'invention, donnés à titre d'exemples illustratifs et non limitatifs.

Les compositions d'encres suivantes, selon l'invention, ont été préparées en mélangeant les produits mentionnés dans le tableau I, dans les proportions indiquées, qui donne également la viscosité et la conductivité des encres obtenues.

**Tableau I**

| Constituants (pourcentages en masses) | **N°1** | **N°2** | **N°3** | **N°4** | **N°5** |
|---|---|---|---|---|---|
| Carbonate de propylène pur (>99%) | **85.5** | **91.4** | **88.9** | **83** | **82.9** |
| Diéthyleneglycol éthyl ether | | | | | **9** |
| Dipropylene glycol | **5** | | **5** | | |
| Tripropyleneglycol methyl ether (Dowanol^{®} TPM) | | | | **8** | |
| Solvent black 3 noir à la graisse (Oil black^{®} 860 Orient chemicals) | | | **3** | **1** | |
| Solvent Black 29 (Orasol^{®} black RLI) | **5** | | | **4.9** | **4** |
| Solvent Black 7 (Nigrosine base) | | **4** | | | **1** |
| Solvent Black 28 (Orasol black CN) | **1** | | **2** | | |
| Résine phénolique (PN 320 de Solutia) | **3** | | | | |
| Résine phénolique (PN 630 de Solutia)) | | | | | **2** |
| Résine cétonique (Résine SK - Hüls) | | **4** | | | |
| Nitrocellulose (E15 de Bergerac NC) | | | | **2** | |
| Thiocyanate de sodium | **0.5** | | | | |
| Potassium hexafluorophosphate | | | | **1** | **1** |
| Ammonium hexafluorophosphate | | **0.5** | **1** | | |
| Surfactant (Fluorad^{®} FC430) | **0.1** | **0.1** | **0.1** | **0.1** | **0.1** |
| Viscosité (mPa.s) | **5.2** | **4.4** | **3.9** | **6.4** | **5.1** |
| Conductivité (µS/cm) | **750** | **710** | **1180** | **1040** | **1160** |

Les compositions selon le tableau I, conformes à l'invention, ne contiennent pas plus de 4 % en masse d'eau, semble-t-il due à l'eau présente en tant qu'impureté inévitable.

Chacun de ces exemples donne des encres stables.

Les encres ainsi préparées ont été testées dans des imprimantes Imaje^{®} de type Série 7 et permettent d'obtenir des impressions d'excellente qualité.

Des impressions réalisées sur des timbres sont au moins aussi résistantes que l'encre des timbres eux-mêmes à toutes sortes de solutions aqueuses et organiques telles que :

L'eau déminéralisée, le méthanol, l'éthanol, la méthyl-ethyl cétone, l'hexane, le toluène, la diméthylformamide, l'eau alcaline à pH 11, l'eau de javel à 8% dans l'eau.

Les encres des exemples 1 à 5 selon l'invention ont été projetées par jet d'encre dans des imprimantes Imaje^{®} de type Jaime^{®} 1000 sur des timbres des USA.

Les messages imprimés étaient une succession de points en ligne droite.

Les timbres sont les suivants :
37 cts US (« bannière étoilée »)
23 Cts (« Georges Washington »)
37 Cts (« Happy Birthday »)
37 Cts (« American Bat »)
37 Cts (« Nouvel an chinois 2003 »)
3 Cts (« étoile »)

Aucune des différentes solutions aqueuses et aucun des solvants organiques n'ont permis de dissoudre les marquages sans dégrader les timbres eux même, même après une immersion prolongée.

## Revendications

1. Composition d'encre pour l'impression par jet continu dévié, liquide à la température ambiante, comprenant :
- un liant ;
- un ou plusieurs colorant(s) et/ou pigment(s) ; et
- un solvant ;
dans laquelle ledit solvant comprend plus de 70 % en poids - par rapport au poids total de l'encre - de carbonate de propylène, et moins de 10 % en poids, de préférence moins de 5 %, de préférence encore moins de 1 %, et mieux 0 % en poids d'eau.

2. Composition d'encre selon la revendication 1 comprenant plus de 80 % en poids, de préférence plus de 85 % en poids, de préférence encore plus de 90 % en poids de carbonate de propylène.

3. Composition d'encre selon l'une quelconque des revendications 1 et 2 comprenant au plus 97 % en poids, de préférence au plus 95% en poids de carbonate de propylène.

4. Composition selon l'une quelconque des revendications précédentes dont le point éclair est supérieur à 60°C.

5. Composition selon l'une quelconque des revendications 1 à 4 comprenant jusqu'à 20 % en poids, de préférence de 5 à 15 % en poids d'un ou plusieurs autre(s) solvants(s) organique(s) différent(s) du carbonate de propylène.

6. Composition d'encre selon la revendication 5, dans laquelle le ou lesdits solvant(s) composé (s) organique (s) est (sont) choisi (s) parmi les alcools ; les cétones ; les éthers d'alkylènes glycols et les esters de ceux-ci tels que les acétates ; le diméthyl formamide ; la N-méthyl pyrrolidone ; et les carbonates autres que le carbonate de propylène tels que le carbonate d'éthylène et les diméthyl et diéthyl carbonates ; et leurs mélanges.

7. Composition selon la revendication 6, dans laquelle ledit ou lesdits autre(s) solvant(s) est (sont) choisi(s) parmi les alcools aliphatiques linéaires ou ramifiés de 1 à 5 atomes de carbone ; les cétones de 3 à 10 atomes de carbone ; les éthers monoalkyliques (en C1 à C6) ou dialkyliques (en C1 à C6) d'alkylènes glycol comprenant 1 à 10 atomes de carbone dans la chaîne alkylène, tels que l'éthylène glycol et le propylène glycol ; et les esters de ceux-ci avec les acides carboxyliques, aliphatiques saturés de 1 à 6 atomes de carbone.

8. Composition selon la revendication 6 ou 7, dans laquelle la quantité du ou desdits autre(s) solvant(s) organique(s) est choisie de façon que le point éclair de la composition soit supérieur à 60°C.

9. Composition d'encre selon l'une quelconque des revendications précédentes, dans laquelle ledit liant comprend un ou plusieurs résine(s) ou polymère(s).

10. Composition d'encre selon la revendication 9, dans laquelle le ou lesdites résine(s) et/ou polymère(s) est(sont) choisie(s) parmi les résines (méth)acryliques, vinyliques, cétoniques, phénoliques, cellulosiques, styréniques, époxy, les polyuréthanes, les styrène-acrylates, et les combinaisons de deux ou plus de ceux-ci.

11. Composition d'encre selon l'une quelconque des revendications précédentes, comprenant de 0,1 à 30 % en poids, de préférence de 1 à 25 % en poids, de préférence encore de 3 à 20 % en poids, de liant.

12. Composition d'encre selon l'une quelconque des revendications précédentes, comprenant, en outre, un ou plusieurs plastifiant(s) à raison de 0,1 à 20 % en poids.

13. Composition d'encre selon l'une quelconque des revendications précédentes, dans laquelle ledit ou lesdits colorant(s) et/ou pigment(s) est (sont) choisi(s) parmi les colorants et pigments connus sous la dénomination de « C. I. Solvent Dyes » et « C. I. Pigments », tels que les C. I. Solvent Black 29, C. I. Solvent Black 7, C. I. Solvent Black 28, C. I. Solvent Black 35, C. I. Solvent Blue 70, C. I. Solvent Red 124, les dispersions de Pigment Blue 60 ou de Pigment Blue 15.

14. Composition selon l'une quelconque des revendications précédentes, comprenant de 0,05 à 25 % en poids de colorant(s) et/ou pigment(s), de préférence de 1 à 20 %, de préférence encore de 3 à 10 % en poids.

15. Composition selon l'une quelconque des revendications précédentes, comprenant, en outre, au moins un sel de conductivité à raison de 0,1 à 20 % en poids, de préférence de 0,1 à 10 % en poids, de préférence encore de 0,1 à 5 % en poids.

16. Composition d'encre selon la revendication 15, dans laquelle ledit sel de conductivité est choisi parmi les sels de métaux alcalins, alcalino-terreux et d'ammoniums simples ou quaternaires, sous forme d'halogénures, perchlorates, nitrates, thiocyanates, formiates, acétates, sulfates hexafluorophosphates, hexafluoroantimonates et propionates.

17. Composition d'encre selon l'une quelconque des revendications précédentes qui a une conductivité supérieure à 300 µS/cm à 20°C, de préférence de 500 µS/cm à 2 000 µS/cm.

18. Composition d'encre selon l'une quelconque des revendications précédentes, comprenant, en outre, un ou plusieurs additif(s) choisi(s) parmi les agents antimousse, les stabilisants chimiques, les stabilisants UV, les agents tensio-actifs, les agents inhibant la corrosion par les sels ; les bactéricides, fongicides et biocides, et les tampons régulateurs de pH.

19. Procédé de marquage d'objets par projection sur ces objets d'une encre par la technique du jet continu dévié, **caractérisée en ce que** l'encre projetée est une composition d'encre selon l'une quelconque des revendications 1 à 18.

20. Substrat **caractérisé en ce qu'**il est pourvu d'un marquage obtenu par séchage de la composition d'encre selon l'une quelconque des revendications 1 à 18.

21. Substrat selon la revendication 20, **caractérisé en ce que** le substrat est en métal, par exemple, en aluminium, en acier, en verre, en céramique, en un matériau contenant de la cellulose tel que du papier éventuellement couché ou glacé, du carton ou du bois, en polymère synthétique (« plastique »), tels que PVC, PET, en polyoléfine, telles que polyéthylène (PE), polypropylène (PP), en « Plexiglas », ou en toute autre substance non poreuse ou poreuse ou en composite de plusieurs des matériaux précédents.

22. Substrat selon la revendication 21, qui est un objet postal, une lettre, un colis, un timbre poste.

## Claims

1. An ink composition for continuous deflected jet printing that is liquid at room temperature and that contains:
- a binder;
- one or more dyes and/or pigments; and
- a solvent;
wherein the said solvent contains more than 70% by weight - relative to the total weight of the ink - of propylene carbonate, and less than 10% by weight, preferably less than 5%, more preferably less than 1% and best 0% by weight of water.

2. An ink composition according to claim 1, containing more than 80% by weight of propylene carbonate, preferably more than 85% by weight, and more preferably more than 90% by weight of propylene carbonate.

3. An ink composition according to any one of claims 1 and 2, containing at most 97% by weight, preferably at most 95% by weight of propylene carbonate.

4. A composition according to any one of the preceding claims, wherein the flash point is higher than 60°C.

5. A composition according to any one of claims 1 to 4, containing up to 20% by weight, preferably 5 to 15% by weight of one or more other organic solvents different from propylene carbonate.

6. An ink composition according to claim 5, wherein the said organic solvent (s) is or are chosen from among alcohols; ketones; alkylene glycol ethers and the esters thereof, such as the acetates; dimethylformamide; N-méthyl-pyrrolidone; and the carbonates other than propylene carbonate, such as ethylene carbonate and the dimethyl and diethyl carbonates; and mixtures thereof.

7. A composition according to claim 6, wherein the said other organic solvent(s) is or are chosen from among the straight-chain or branched aliphatic alcohols containing 1 to 5 carbon atoms; the ketones containing 3 to 10 carbon atoms; the mono-(C1 to C6)alkyl or di-(Cl to C6)-alkyl ethers of alkylene glycols containing 1 to 10 carbon atoms in the alkylene chain, such as ethylene and propylene glycol; and the esters thereof with saturated aliphatic carboxylic acids containing 1 to 6 carbon atoms.

8. A composition according to claim 6 or 7, wherein the content of the said organic solvent(s) is chosen in such a way that the flash point of the composition is higher than 60°C.

9. An ink composition according to any one of the preceding claims, wherein the said binder comprises one or more resin(s) or polymer(s).

10. A composition according to claim 9, wherein the said resin(s) and/or polymer(s) is or are chosen from among the (meth)acrylic, vinyl, ketone, phenol, cellulose, styrene and epoxy resins, the polyurethanes, the styrene acrylates and the combinations of two or more thereof.

11. An ink composition according to any one of the preceding claims, containing from 0.1 to 30% by weight, preferably from 1 to 25% by weight, more preferably from 3 to 20% by weight of binder.

12. An ink composition according to any one of the preceding claims, additionally containing one or more plasticizers in a proportion of from 0.1 to 20% by weight.

13. An ink composition according to any one of the preceding claims, wherein the said dye(s) and/or pigment(s) is or are chosen from among the dyes and pigments known under the name of "C. I. Solvent Dyes" and "C. I. Pigments", such as C. I. Solvent Black 29, C. I. Solvent Black 7, C. I. Solvent Black 28, C. I. Solvent Black 35, C. I. Solvent Blue 70, C. I. Solvent Red 124 and the dispersions of Pigment Blue 60 or of Pigment Blue 15.

14. A composition according to any one of the preceding claims, containing from 0.05 to 25% by weight of dye(s) and/or pigment(s), preferably from 1 to 20% and more preferably from 3 to 10% by weight.

15. A composition according to any one of the preceding claims, additionally containing at least one conductivity salt in a proportion of from 0.1 to 20% by weight, preferably from 0.1 to 10% by weight and more preferably from 0.1 to 5% by weight.

16. An ink composition according to claim 15, wherein the said conductivity salt is chosen from among the salts of alkali metals, alkaline earths and simple or quaternary ammonium, in the form of halides, perchlorates, nitrates, thiocyanates, formates, acetates, sulfates, propionates, hexafluorophosphates, hexafluoroantimonates and propionates.

17. An ink composition according to any one of the preceding claims, having a conductivity of greater than 300 µS/cm at 20°C, preferably from 500 to 2000 µS/cm.

18. An ink composition according to any one of the preceding claims, additionally containing one or more additives from among anti-foaming agents, chemical stabilizers, UV stabilizers, surfactants, agents for inhibiting corrosion by salts; bactericides, fungicides and biocides, and pH regulating buffers.

19. A method for marking of articles by spraying an ink onto the substrate by means of the continuous deflected jet technique, **characterized in that** the sprayed ink is an ink composition according to any one of claims 1 to 18.

20. A substrate, **characterized in that** it is provided with a marking obtained by drying of the ink composition according to any one of claims 1 to 18.

21. A substrate according to claim 20, **characterized in that** the substrate is of metal, such as aluminum, of steel, of glass, of ceramic, of a cellulose-containing material such as paper, which may be coated or glazed, cardboard or wood, of synthetic polymer ("plastic") such as PVC or PET, of polyolefin such as polyethylene (PE) or polypropylene (PP), of "Plexiglass" or of any other nonporous or porous substance or of a composite of a plurality of the foregoing materials.

22. A substrate according to claim 21, which is a postal article, a letter, a package or a postal stamp.

## Patentansprüche

1. Tintenzusammensetzung für das Drucken mittels eines kontinuierlichen abgelenkten Strahls, die bei Umgebungstemperatur flüssig ist, umfassend:
- ein Bindemittel;
- einen oder mehrere Farbstoff(e) und/oder Pigment(e); und
- ein Lösungsmittel;
wobei das Lösungsmittel bezogen auf das Gesamtgewicht der Tinte mehr als 70 Gewichtsprozent Propylenkarbonat und weniger als 10 Gewichtsprozent, vorzugsweise weniger als 5 Gewichtsprozent, noch stärker bevorzugt weniger als 1 Gewichtsprozent und am besten 0 Gewichtsprozent Wasser enthält.

2. Tintenzusammensetzung nach Anspruch 1, umfassend mehr als 80 Gewichtsprozent, vorzugsweise mehr als 85 Gewichtsprozent, noch bevorzugter mehr als 90 Gewichtsprozent Propylenkarbonat enthält.

3. Tintenzusammensetzung nach einem der Ansprüche 1 und 2, umfassend höchstens 97 Gewichtsprozent, vorzugsweise höchstens 95 Gewichtsprozent Propylenkarbonat.

4. Zusammensetzung nach einem der vorhergehenden Ansprüche, deren Flammpunkt über 60°C liegt.

5. Zusammensetzung nach einem der Ansprüche 1 - 4, umfassend bis zu 20 Gewichtsprozent, vorzugsweise von 5 - 15 Gewichtsprozent eines oder mehrerer anderer organischer Lösungsmittel, das/die von Propylenkarbonat verschieden ist/sind.

6. Tintenzusammensetzung nach Anspruch 5, bei der das oder die zusammengesetzte organische Lösungsmittel ausgewählt ist/sind aus den Alkoholen, den Ketonen, den Äthern von Alkylenglykolen und den Estern der selben wie z. B. den Acetaten, dem Dimethylformamid, dem N-Methylpyrolidon, und den Karbonaten außer dem Propylenkarbonat, wie z. B. dem Ethylenkarbonat und den Dimethyl- und Diethylkarbonaten, sowie ihren Mischungen.

7. Zusammensetzung nach Anspruch 6, wobei das oder die andere Lösungsmittel ausgewählt ist/sind aus den geraden oder verzweigten aliphatischen Alkoholen mit 1 - 5 Kohlenstoffatomen, den Ketonen mit 3 - 10 Kohlenstoffatomen, den monoalkylischen (mit C1 bis C6) oder dialkylischen (mit C1 - C6) Äthern von Alkylenglykol umfassend 1 - 10 Kohlenstoffatome in der Alkylenkette, beispielsweise Ethylenglykol und Propylenglykol, sowie den Estern der selben mit den Karboxylsäuren, aliphatisch-gesättigt mit 1 - 6 Kohlenstoffatomen.

8. Zusammensetzung nach Anspruch 6 oder 7, wobei die Menge des oder der anderen organischen Lösungsmittel so gewählt ist, dass der Flammpunkt der Zusammensetzung über 60°C liegt.

9. Tintenzusammensetzung nach einem der vorhergehenden Ansprüche, wobei das Bindemittel ein oder mehrere Harz(e) oder Polymer(e) enthält.

10. Tintenzusammensetzung nach Anspruch 9, wobei das oder die Harz(e) und/oder Polymer(e) ausgewählt ist/sind aus den (Meth-)Akryl-, Vinyl-, Keton-, Phenol-, Zellulose-, Styrol-, Epoxid-Harzen, den Polyurethanen, den Styrol-Akrylaten und den Kombinationen von zwei oder mehr derselben.

11. Tintenzusammensetzung nach einem der vorhergehenden Ansprüche, umfassend von 0,1 - 30 Gewichtsprozent, vorzugsweise von 1 - 25 Gewichtsprozent, noch stärker bevorzugt von 3 - 20 Gewichtsprozent Bindemittel.

12. Tintenzusammensetzung nach einem der vorhergehenden Ansprüche, ferner umfassend einen oder mehrere Weichmacher im Verhältnis von 0,1 - 20 Gewichtsprozent.

13. Tintenzusammensetzung nach einem der vorhergehenden Ansprüche, wobei der oder die Farbstoff(e) und/oder Pigment(e) ausgewählt ist (sind) aus den Farbstoffen und Pigmenten, die bekannt sind unter der Bezeichnung "C. I. Solvent Dyes" und "C. I. Pigments", beispielsweise die C. I. Solvent Black 29, C. I. Solvent Black 7, C. I. Solvent Black 28, C. I. Solvent Black 35, C. I. Solvent Blue 70, C. I. Solvent Red 124, den Dispersionen von Pigment Blue 60 oder von Pigment Blue 15.

14. Zusammensetzung nach einem der vorhergehenden Ansprüche, umfassend von 0,05 bis 25 Gewichtsprozent Farbstoff(e) und/oder Pigment(e), vorzugsweise von 1 - 20 Gewichtsprozent, noch stärker bevorzugt von 3 - 10 Gewichtsprozent.

15. Zusammensetzung nach einem der vorhergehenden Ansprüche, ferner umfassend wenigstens ein leitfähiges Salz im Verhältnis von 0,1 bis 20 Gewichtsprozent, vorzugsweise von 0,1 bis 10 Gewichtsprozent, noch stärker bevorzugt von 0,1 - 5 Gewichtsprozent.

16. Tintenzusammensetzung nach Anspruch 15, wobei das leitfähige Salz ausgewählt ist aus den Salzen von Alkalimetallen, Erdalkalimetallen und einfachen oder quaternären Ammoniumverbindungen in Form von Halogeniden, Perchloraten, Nitraten, Thiocyanaten, Formiaten, Acetaten, Sulfaten, Hexafluorophosphaten, Hexafluoroantimonaten und Propionaten.

17. Tintenzusammensetzung nach einem der vorhergehenden Ansprüche, die eine Leitfähigkeit von mehr als 300 µS/cm bei 20°C aufweist, vorzugsweise von 500 µS/cm bis 2000 µS/cm.

18. Tintenzusammensetzung nach einem der vorhergehenden Ansprüche, ferner umfassend ein oder mehrere Additiv(e), das/die ausgewählt ist/sind aus den Antischaummitteln, den chemischen Stabilisatoren, den UV-Stabilisatoren, den tensioaktiven Mitteln, den Mitteln zur Verhinderung von Korrosion durch die Salze, den Bakteriziden, Fungiziden und Bioziden, und den pH-Puffern.

19. Verfahren zum Markieren von Objekten durch Spritzen von Tinte auf diese Objekte mit Hilfe der Technik des kontinuierlichen abgelenkten Strahls, **dadurch gekennzeichnet, dass** die gespritzte Tinte eine Tintenzusammensetzung nach einem der Ansprüche 1 - 18 ist.

20. Substrat, **dadurch gekennzeichnet, dass** es mit einer Markierung versehen ist, die durch Trocknen der Tintenzusammensetzung nach einem der Ansprüche 1-18 erhalten worden ist.

21. Substrat nach Anspruch 20, **dadurch gekennzeichnet, dass** das Substrat aus Metall ist, beispielsweise aus Aluminium, aus Stahl, aus Glas, aus Keramik, aus einem Zellulose enthaltendem Material wie z. B. gegebenenfalls beschichtetes oder satiniertes Papier, Karton oder Holz, aus synthetischem Polymer ("Plastik"), wie z. B. PVC, PET, aus Polyolefin wie z. B. Polyethylen (PE), Polypropylen (PP), aus "Plexiglas", oder aus irgendeiner anderen nicht porösen oder porösen Substanz oder aus einem Verbund mehrerer der vorgenannten Materialien.

22. Substrat nach Anspruch 21, das ein postalisches Objekt, ein Brief, ein Päckchen, eine Briefmarke ist.
